# EUROPÄISCHE PATENTSCHRIFT

(11) **EP 0 947 987 B1**
(45) Veröffentlichungstag und Bekanntmachung des Hinweises auf die Patenterteilung: **04.05.2005**
(21) Anmeldenummer: 99103088.3
(22) Anmeldetag: 17.02.1999
(51) Int. Cl.: G11B 20/18, G06F 11/10, G06F 3/06

(54) **Verfahren zum Speichern von Daten**
Method of storing data
Procédé de stockage de données

(30) Priorität: 13.03.1998 DE 19811035
(43) Veröffentlichungstag der Anmeldung: 06.10.1999
(73) Patentinhaber: GRAU DataStorage AG, 73529 Schwäbisch Gmünd (DE)
(72) Erfinder: Lechner, Ulrich, 86732 Oettingen (DE)
(74) Vertreter: HOEGER, STELLRECHT & PARTNER Patentanwälte

(56) Entgegenhaltungen:
- EP-A- 0 369 707
- EP-A- 0 696 773
- US-A- 3 631 426
- US-A- 4 761 785
- US-A- 5 412 668
- US-A- 5 608 891
- PATENT ABSTRACTS OF JAPAN vol. 098, no. 002, 30. Januar 1998 (1998-01-30) & JP 09 258915 A (TOSHIBA CORP), 3. Oktober 1997 (1997-10-03)
- PATENT ABSTRACTS OF JAPAN vol. 096, no. 007, 31. Juli 1996 (1996-07-31) & JP 08 077699 A (VICTOR CO OF JAPAN LTD), 22. März 1996 (1996-03-22)

## Beschreibung

Die Erfindung betrifft ein Verfahren zum Abspeichern von Daten in Form einer Vielzahl von Datenfolgen auf einer Vielzahl von Datenträgern, um nach einem Datenverlust wieder die Daten der Datenfolgen zur Verfügung stellen zu können.

Ein solches Verfahren ist aus US 5.608.891 bekannt.

Bei den bislang bekannten Verfahren zum Abspeichern von Datenfolgen besteht stets das Problem, in möglichst einfacher Weise nach einem Datenverlust wieder die Daten der Datenfolgen zur Verfügung stellen zu können.

Der Erfindung liegt daher die Aufgabe zugrunde, ein möglichst einfach durchzuführendes und sicheres Verfahren zum Wiederherstellen von Daten nach einem Datenverlust zu schaffen.

Diese Aufgabe wird erfindungsgemäß durch ein Verfahren gemäß Anspruch 1 gelöst.

Der Vorteil der erfindungsgemäßen Lösung ist darin zu sehen, daß mit dieser eine vorteilhafte Möglichkeit besteht, eine Prüfdatenfolge zu generieren, welche sich auf alle Datenfolgen einer Datengruppe erstreckt, ohne daß die Notwendigkeit besteht, alle Datenfolgen der Datengruppe parallel zugriffsbereit zu halten, um die Prüfdatenfolge zu erstellen.

Ein besonderer Vorteil des erfindungsgemäßen Verfahrens ist darin zu sehen, daß die Datenfolgen einer Datengruppe keinerlei inhaltlichen Zusammenhang haben müssen, vorzugsweise keinerlei inhaltlichen Zusammenhang haben, so daß beliebige Datenfolgen zu Datengruppen zusammengefaßt und für diese jeweils die Prüfdatenfolgen zusammengestellt werden können.

Prinzipiell wäre es bei dem erfindungsgemäßen Verfahren aber auch noch möglich, beim Erstellen die vorläufige Prüfdatenfolge stets in jedem Schritt auf mehrere Datenfolgen der Datengruppe zu erweitern. Dies macht es jedoch notwendig, alle Datenfolgen, auf welche die vorläufige Prüfdatenfolge erweitert werden soll, parallel zugriffsbereit zu halten.

Aus diesem Grund ist das erfindungsgemäße Verfahren besonders vorteilhaft, wenn die vorläufige Prüfdatenfolge jeweils nur auf eine der weiteren Datenfolgen erweitert wird.

Hinsichtlich der Abspeicherung der Prüfdatenfolge wurden bislang keine näheren Angaben gemacht. So wäre es beispielsweise denkbar, auch die vorläufige Prüfdatenfolge auf einem Datenträger abzuspeichern, der einzeln handhabbar ist. Eine besonders günstige Lösung sieht jedoch vor, daß die vorläufige Prüfdatenfolge auf einem Zwischenspeicher gespeichert wird.

Dies läßt sich besonders günstig dann durchführen, wenn der Zwischenspeicher auf einem von den Datenträgern für die Datengruppe getrennten Datenträger angelegt wird.

Vorzugsweise wird dabei der Zwischenspeicher auf einem Festplattenspeicher angelegt.

Hinsichtlich der Art der Abspeicherung der Datenfolgen selbst wurden bislang keine näheren Angaben gemacht. So könnte beispielsweise vorgesehen sein, daß ein Datenträger mehrere Datenfolgen aufweist.

Besonders günstig läßt sich das erfindungsgemäße Verfahren jedoch dann durchführen, wenn jede Datenfolge einer Datengruppe auf einem separaten Datenträger angeordnet wird, so daß die Zahl der zur Datengruppe zusammengefaßten Datenfolgen gleich der Zahl der zu dieser Datengruppe gehörenden Datenträger ist. Damit können die Daten eines gesamten Datenträgers rekonstruiert werden, wenn dieser nicht mehr zur Verfügung steht.

Hinsichtlich der Anordnung der Datenträger sind bislang keine näheren Angaben gemacht. So könnten diese Datenträger beispielsweise ebenfalls Festplattenspeicher sein. Besonders geeignet ist jedoch das erfindungsgemäße Verfahren für den Fall, daß jeder der Datenträger ein auswechselbarer Datenträger ist, beispielsweise eine Wechselfestplatte, ein magnetooptischer Datenträger oder ein in einer in einem Archivspeicher handhabbaren Datenträgerkassette angeordnet ist.

Hinsichtlich der Vorgehensweise bei der erfindungsgemäßen Erstellung von Prüfdatenfolgen sind unterschiedlichste Lösungen denkbar. So wäre es beispielsweise denkbar, unmittelbar nach Generierung der einzelnen Datenfolgen die entsprechende vorläufigen Prüfdatenfolge zu erstellen und diese so lange zu erweitern, bis alle Datenfolgen einer Datengruppe erfaßt sind.

Dieses Verfahren hat jedoch den Nachteil, daß damit eine Abspeicherung ankommender Daten in Form von Datenfolgen entweder mit geringerer Geschwindigkeit oder höherer Rechnerleistung möglich ist.

Aus diesem Grund sieht ein besonders vorteilhaftes Ausführungsbeispiel vor, daß ankommende Daten zunächst in Form der Datenfolgen auf die Datenträger geschrieben werden und dann in nicht oder wenig aktiven Zeiten des Rechners oder in Zeiten geringer Beanspruchung der Datenspeichereinrichtung die Datenfolgen einer Datengruppe von den Datenträgern gelesen werden und über die vorläufigen Prüfdatenfolgen die Prüfdatenfolge erstellt wird. Ferner hat dieses Verfahren den Vorteil, daß zwangsläufig die geschriebenen Daten auf ihre Lesbarkeit überprüft werden.

Auch beim Schreiben der Datenfolgen auf die Datenträger wäre es beispielsweise denkbar, insbesondere, wenn eine schnelle Abspeicherung von Daten erforderlich ist, mehrere Datenfolgen gleichzeitig auf mehrere Datenträger zu schreiben.

Das erfindungsgemäße Verfahren läßt sich jedoch aber auch dann vorteilhafter realisieren, wenn die Datenfolgen nacheinander auf die Datenträger geschrieben werden.

Desgleichen könnte auch beim Erstellen der vorläufigen Prüfdatenfolgen so vorgegangen werden, daß mehrere Datenfolgen von mehreren Datenträgern gleichzeitig gelesen werden. Hier hat es sich jedoch, insbesondere um die Komplexität des erfindungsgemäßen Verfahrens möglichst gering zu halten, als besonders vorteilhaft erwiesen, wenn die Datenfolgen auf den Datenträgern nacheinander gelesen werden.

Im Zusammenhang mit dem vorstehenden Ausführungsbeispiel erläuterte Vorgehensweise dergestalt, daß zunächst die Datenfolgen auf die Datenträger geschrieben und dann nach erneutem Lesen die vorläufigen Prüfdatenfolgen und schließlich die Prüfdatenfolge ermittelt werden, hat jedoch den Nachteil, daß bis zur Ermittlung der Prüfdatenfolge keine zusätzliche Datensicherheit gegeben ist, so daß bei einem Datenverlust bis zu dieser Ermittlung der Prüfdatenfolge eine Wiederherstellung der Daten nicht möglich ist.

Zu einer verbesserten Datensicherung sieht ein vorteilhaftes Ausführungsbeispiel des erfindungsgemäßen Verfahrens vor, daß beim Schreiben jeder der Datenfolgen auf einen der Datenträger diese Datenfolge zusätzlich auf einen ergänzenden Datenträger geschrieben wird.

Hierdurch wird eine zusätzliche Datensicherung erreicht, die gewährleistet, daß zu jedem Zeitpunkt die Möglichkeit besteht, verlorene Daten wieder zu rekonstruieren.

Um die Speicherkapazität bei einem derartigen Schreiben der Datenfolgen auf einen ergänzenden Datenträger möglichst gering zu halten, ist vorzugsweise vorgesehen, daß der ergänzende Datenträger nach Einbeziehen der diesem entsprechenden Datenfolge in die vorläufige Prüfdatenfolge freigegeben wird.

Dies ist beispielsweise dadurch möglich, daß nach jedem einzelnen Einbeziehen einer Datenfolge die Freigabe der entsprechenden Datenfolge auf dem ergänzenden Datenträger erfolgt. Es ist aber auch denkbar, daß erst nach Erstellen der gesamten Prüfdatenfolge die entsprechenden Datenfolgen auf den ergänzenden Datenträgern freigegeben werden, so daß auch ein Datenverlust bei der Erstellung der Prüfdatenfolge die Möglichkeit schafft, die Daten zu rekonstruieren, gegebenenfalls die gesamte Prüfdatenfolge erneut zu erstellen.

Die erfindungsgemäß ermittelte Prüfdatenfolge könnte beispielsweise nach ihrer Erstellung auf dem Zwischenspeicher weiter gespeichert werden. Besonders günstig ist es jedoch, insbesondere um wiederum den Zwischenspeicher möglichst klein halten zu können, wenn die Prüfdatenfolge auf einem Prüfdatenträger gespeichert und mit den mehreren Datenträgern beispielsweise in einem Archivspeicher als handhabbarer Datenspeicher abgelegt wird.

Alternativ oder ergänzend zu den vorstehend dargelegten Ausführungsbeispielen des erfindungsgemäßen Verfahrens wird die eingangs genannte Aufgabe auch bei einem Verfahren der eingangs genannten Art erfindungsgemäß dadurch gelöst, daß die Datenfolgen auf dem Datenträger in Form von Nutzdatenabschnitten und diesen jeweils lokal zugeordneten Controldatenabschnitten abgespeichert werden und daß die Controldatenabschnitte aller Nutzdatenabschnitte eines Datenträgers zu einer Controldatensequenz zusammengefaßt und an einem Ende der Folge von Nutzdatenabschnitten auf dem Datenträger gespeichert werden.

Diese erfindungsgemäße Lösung betrifft insbesondere den Verlust von Controldaten und das schnelle Wiederauffinden von Nutzdatenabschnitten nach einem derartigen Verlust von Controldaten, wobei die erfindungsgemäße Zusammenfassung der Controldatenabschnitte in eine Controldatensequenz die Möglichkeit bietet, eine schnelle Übersicht über die durch die Controldatenabschnitte angegebenen Nutzdatenabschnitt auf dem Datenträger schnell aufzufinden.

Um hinsichtlich eines Verlustes von Controldatenabschnitten eine besondere Sicherheit zu schaffen, ist vorzugsweise vorgesehen, daß auf dem Datenträger zu jedem Nutzdatenabschnitt der diesem lokal zugeordnete Controldatenabschnitt zusätzlich abgespeichert wird.

Ein derartiges zusätzliches Abspeichern des lokal zugeordneten Controldatenabschnitts kann entweder vor oder nach dem entsprechenden Nutzdatenabschnitt erfolgen.

Ferner läßt sich die Datensicherheit auch noch dadurch steigern, daß die den einzelnen Nutzdatenabschnitten eines Datenträgers zugeordneten Controldatenabschnitte diesem Datenträger zugeordnet in einem Zwischenspeicher gespeichert werden.

Ein derartiges zusätzliches Abspeichern auf einem Zwischenspeicher erleichtert insbesondere das schnelle Auffinden eines Nutzdatenabschnittes, da auf dem Zwischenspeicher ein schneller Zugriff auf die einzelnen Controldatenabschnitte möglich ist.

Besonders vorteilhaft ist es dabei, wenn die einzelnen Controldatenabschnitte auf dem Zwischenspeicher ebenfalls als Controldatensequenz zusammengefaßt dem jeweiligen Datenträger zugeordnet gespeichert werden.

Hinsichtlich des Zwischenspeichers wurden bislang keine näheren Angaben gemacht. Besonders vorteilhaft ist es, insbesondere um einen schnellen Zugriff auf die Controldatenabschnitte zu haben, wenn als Zwischenspeicher ein Festplattenspeicher eingesetzt wird.

Ferner wurde der Inhalt der Controldatenabschnitte bislang nicht im einzelnen spezifiziert. So ist vorteilhafterweise vorgesehen, daß in jedem Controldatenabschnitt eine Kopfinformation und daran anschließend Datenfileinformationen gespeichert werden.

Insbesondere werden als Datenfileinformationen unter anderem für jedes Datenfile Informationen über Position, Länge, Name und Zeit des entsprechenden Files gespeichert.

Hinsichtlich der Durchführung des erfindungsgemäßen Verfahrens im einzelnen wurden bislang keine näheren Angaben gemacht. So sieht ein vorteilhaftes Ausführungsbeispiel vor, daß die Datenträger in Datenträgerkassetten eines Archivsystems angeordnet sind und daß die Datenträgerkassetten innerhalb des Archivsystems in einer Aufbewahrungseinheit gespeichert, in mindestens einer Schreib-/Leseeinheit gelesen oder beschrieben und von einer Übergabeeinrichtung zwischen der Schreib-/Leseeinheit und der Aufbewahrungseinheit hinund hertransportiert werden.

Ein derartiger Archivspeicher hat den Vorteil, daß diesem in einfacher Weise eine Vielzahl von Datenträgerkassetten gehandhabt werden kann und somit eine große Datenmenge vorteilhafterweise gespeichert werden kann.

Ein derartiger Archivspeicher ist vorzugsweise von einer Datenspeichersteuerung gesteuert, wobei die Datenspeichersteuerung einerseits die Daten beispielsweise von einem Rechner entgegennimmt und andererseits den Archivspeicher derart steuert, daß die Daten in erfindungsgemäßer Weise in Form von Datenfolgen abgespeichert werden.

Vorzugsweise ist dabei vorgesehen, daß die Datenspeichersteuerung noch mit einem zusätzlichen Festplattenspeicher arbeitet, welcher von der Datenspeichersteuerung parallel zum Archivspeicher betrieben wird.

Vorzugsweise dient ein derartiger Festplattenspeicher als Zwischenspeicher, und zwar in der Kommunikation mit dem externen Rechner und auch bei der Erstellung der Prüfdatenfolge.

Insbesondere bietet sich ein derartiger Zwischenspeicher bei der Erstellung der vorläufigen Prüfdatenfolgen und der Erweiterung derselben als günstige Lösung an.

Eine erfindungsgemäße Datenspeichereinrichtung ist vorzugsweise durch die Datenspeichersteuerung derart gesteuert, daß die Langzeitspeicherung der Daten mittels der Datenträger in dem Archivspeicher erfolgt und außerdem die Datenspeichersteuerung mit dem Rechner wie eine einzige Speichereinheit kommuniziert und vorzugsweise ein Datenaustausch mit dem Rechner in der Größenordnung von mit einem Festplattenspeicher entsprechenden Datenaustauschraten zuläßt.

Dazu werden insbesondere die vom Rechner kommenden oder dem Rechner zur Verfügung gestellten Daten auf dem Festplattenspeicher zwischengespeichert und sind somit zur schnellen Kommunikation verfügbar, während die Übergabe der Daten von dem Festplattenspeicher in den Archivspeicher dann in den Zeiten erfolgt, in denen vom Rechner keine oder nur wenig Daten angefordert oder übermittelt werden.

Weitere Merkmale und Vorteile des erfindungsgemäßen Verfahrens sind Gegenstand der nachfolgenden Beschreibung eines Ausführungsbeispiels einer erfindungsgemäßen Datenspeichereinrichtung und eines erfindungsgemäßen Verfahrens zur Speicherung von Daten.

In der Zeichnung zeigen:
- Fig. 1: eine schematische Darstellung eines Ausführungsbeispiels der erfindungsgemäßen Speichereinrichtung in Form von einzelnen Einheiten der Datenspeichereinrichtung zugeordneten Blöcken sowie die Kommunikation der erfindungsgemäßen Datenspeichereinrichtung mit einem Rechner;
- Fig. 2: eine schematische Darstellung einer Datenfolgen umfassenden Datengruppe und einer Prüfdatenfolge;
- Fig. 3: eine schematische Darstellung einer Erstellung der Prüfdatenfolge gemäß dem Stand der Technik;
- Fig. 4 bis Fig 12: eine schematische Darstellung einer Erstellung einer Prüfdatenfolge gemäß der vorliegenden Erfindung mit gleichzeitiger umfassender Datensicherung bis zur Erstellung der Prüfdatenfolge;
- Fig. 13: eine schematische Darstellung eines Verfahrens zum Abspeichern von Daten mit schnellem Zugriff auf Nutzdatenabschnitte.

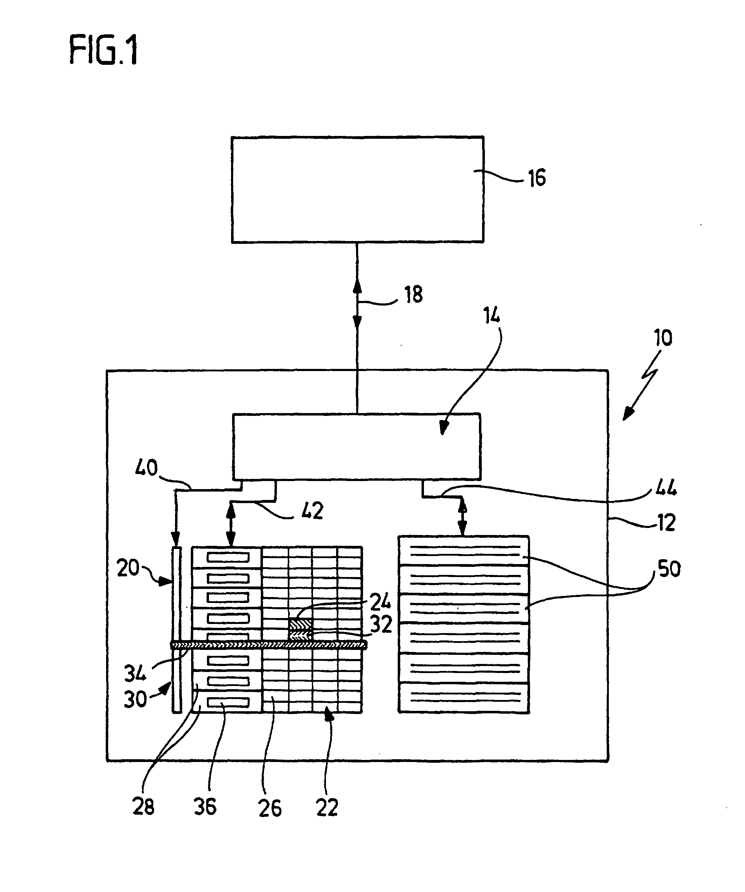

Ein Ausführungsbeispiel einer erfindungsgemäßen Datenspeichereinrichtung, schematisch dargestellt in Fig. 1 und als Ganzes mit 10 bezeichnet, umfaßt ein schematisch mit 12 bezeichnetes Gestell, in welchem eine Datenspeichersteuerung 14 angeordnet ist, die mit einem externen Rechner 16 oder einem Netzwerk und somit mit mehreren Rechnern kommuniziert und über einen Pfad 18 Daten austauscht. Die Datenspeichersteuerung 14 betreibt dabei einen als Ganzes mit 20 bezeichneten Archivspeicher, welcher eine Aufbewahrungseinheit 22 für Datenträgerkassetten 24 aufweist, wobei die Aufbewahrungseinheit 22 eine Vielzahl von Speicherfächern 26 für Datenträgerkassetten 24 umfaßt. Außerdem umfaßt der Archivspeicher 20 noch mehrere Schreib-/Leseeinheiten 28, in welche die Datenträgerkassetten 24 einsetzbar sind, um auf diese Daten zu schreiben oder von diesen Daten zu lesen.

Zum Transport der Datenträgerkassetten 24 zwischen den Schreib-/Leseeinheiten 28 und den Speicherfächern 26 der Aufbewahrungseinheit 22 ist eine als Ganzes mit 30 bezeichnete Übergabeeinrichtung vorgesehen, welche beispielsweise einen Greifer 32 aufweist, mit welchem Datenträgerkassetten 24 in den Speicherfächern 26 der Aufbewahrungseinheit gefaßt und in die Schreib-/Leseeinheiten 28 transportiert oder in diesen Schreib-/Leseeinheiten 28 gefaßt in die Speicherfächer 26 übergeben werden können.

Der Greifer 32 ist vorzugsweise an einer Handhabungseinheit 34 der Übergabeeinrichtung 30 montiert und ist durch die Handhabungseinheit 34 zwischen den Speicherfächern 26 und verschiedenen Einlegeschächten 36 der Schreib-/Leseeinheiten 28 hin- und herbewegbar.

Um nun die einzelnen Datenträgerkassetten 24 in die jeweiligen Schreib-/Leseeinheiten 28 einzulegen, zu beschreiben und zu lesen und danach wieder in den Speicherfächern 26 der Aufbewahrungseinheit 22 abzulegen, steuert die Datenspeichersteuerung 14 über einen Kommunikationspfad 40 die Übergabeeinrichtung 30 an, das heißt, insbesondere deren Handhabungseinheit 34 und deren Greifer 32, und über einen Kommunikationspfad 42 die Schreib-/Leseeinheiten 28, wobei über den Kommunikationspfad 42 auch auf den Datenträgerkassetten 24 zu speichernde Daten oder von den Datenträgerkassetten 24 gelesene Daten übergeben werden.

Die Datenspeichersteuerung 14 ist weiterhin über einen Kommunikationspfad 44 mit mehreren Festplattenspeichern 50 verbunden, die ebenfalls in dem Gestell 12 angeordnet sind und dazu dienen, von der Datenspeichersteuerung 14 übergebene Daten zwischenzuspeichern.

Die mit dem Rechner 16 über die Datenleitung 18 kommunizierende Datenspeichersteuerung 14 tauscht mit dem Rechner 16 über den Pfad 18 Daten mit einer Datenaustauschrate aus, wie wenn die gesamte Datenspeichereinrichtung 10 ein Festplattenspeicher wäre. Hierzu legt die Datenspeichersteuerung 14 beispielsweise über den Pfad 18 der erfindungsgemäßen Datenspeichereinrichtung 10 übergebene Daten - insbesondere, wenn es sich um Datensätze handelt, die nicht als Ganzes einfach aufeinanderfolgend auf ein Band zu schreiben sind - zunächst in den Festplattenspeichern 50 ab, um dann, wenn vom Rechner 16 keine Datenübergabe oder keine Datenanforderung mehr erfolgt, diese Daten auf Datenträgerkassetten 24 in den verschiedenen Schreib-/Leseeinheiten 28 zu überschreiben, wobei die beschriebenen Datenträgerkassetten 24 dann von der Übergabeeinrichtung 30 in den Speicherfächern 26 der Aufbewahrungseinheit 22 abgelegt werden. Sollte eine schnelle Datenausgabe über die Datenleitung 18 an den Rechner 16 notwendig werden, beispielsweise dann, wenn der Rechner 16 eine bestimmte Art von auf den Datenträgerkassetten 24 gespeicherten Daten - insbesondere nicht auf einem einzigen Band zusammenhängend gespeicherte Datensätze - anfordert, so steuert die Datenspeichersteuerung 14 zunächst die Übergabeeinrichtung 30 dergestalt an, daß sie die entsprechenden Datenträgerkassetten 24 in den jeweiligen Speicherfächern 26 der Aufbewahrungseinheit 22 auffindet, in die Einlegeschächte 36 der Schreib-/Leseeinieiten 28 einlegt, so daß dann in den Schreib-/Leseeinieiten die eingelegten Datenträgerkassetten 24 gelesen und die Daten in die Festplattenspeicher 50 überschrieber werden können, in denen diese Daten dann auf Abruf durch der Rechner 16 mit der für Festplattenspeicher üblichen Datenaustauschrate bereitstehen.

Sollen jedoch beispielsweise Datensätze auf einem Band hintereinander zusammenhängend gespeichert werden oder auf diesem Band gelesen werden, so kann die Datenspeichersteuerung 14 auch direkt auf das Band in der jeweiligen Schreib-/Leseeinheit 28 zugreifen, da in diesem Fall eine Datenaustauschrate möglich ist, die mindestens der mit einem Festplattenspeicher entspricht.

Somit besteht insgesamt die Möglichkeit, die Kommunikation zwischen dem Rechner und der erfindungsgemäßen Datenspeichereinrichtung als Ganzes dergestalt durchzuführen, wie wenn die erfindungsgemäße Datenspeichereinrichtung 10 lediglich eine Ansammlung einer Vielzahl von Festplattenspeichern 50 wäre, obwohl letztlich für eine Langzeitspeicherung die Daten in Datenträgerkassetten 24 kostengünstig und sicher abgespeichert werden.

Um die Daten auf in den einzelnen Datenträgerkassetten 24 enthaltenen Datenträgern 60 zumindest dann wieder gewinnen zu können, wenn bei einem Datenträger 60 ein Teil der Daten verloren gegangen ist, werden die Datenträger 60 zu Datengruppen 62 zusammengefaßt, wobei jede Datengruppe 62 eine feste Zahl von Datenträgern 60₁ bis 60_{N} umfaßt und die Zahl N üblicherweise fünf ist.

Jeder der Datengruppen 62 wird dann ein Prüfdatenträger 64 zugeordnet, welcher eine Prüfdatenfolge 66 aufweist.

Die Prüfdatenfolge 66 ist dabei so aufgebaut, daß sie eine auf den Datenträgern 60₁ bis 60_{N} abgelegten Datenfolgen 70₁ bis 70_{N} entsprechende Prüfinformation aufweist.

Die Prüfinformation läßt sich beispielsweise durch eine Folge von Paritätsbits 68 darstellen, welche die Prüfdatenfolge 66 bilden.

Jedes Paritätsbit 68 repräsentiert dabei die Parität einer von entsprechenden Bits 72₁ bis 72_{N} der Datenfolgen 70₁ bis 70_{N} ermittelten Prüfsumme.

Beispielsweise wird die Prüfsumme aus dem ersten Bit 72₁ der ersten Datenfolge 70₁, dem ersten Bit 72₂ der zweiten Datenfolge 70₂, dem ersten Bit 72₃ der dritten Datenfolge 70₃ bis zum ersten Bit 72_{N} N-ten Datenfolge 70_{N} gebildet. In gleicher Weise wird mit dem zweiten Bit aller Datenfolgen 70₁ bis 70_{N} verfahren und die Paritätsinformation als zweites Prüfbit der Prüfdatenfolge 66 abgelegt.

Mit einer derartigen Prüfdatenfolge 66 besteht nun die Möglichkeit, beispielsweise bei Verlust von Bits in der zweiten Datenfolge 70₂ des zweiten Datenträgers 60₂ diese Bits zu rekonstruieren, nämlich dadurch, daß die entsprechenden Bits der übrigen Datenfolgen 70₁ und 70₃ bis 70_{N} und die Prüfdatenfolge 66 herangezogen und bezüglich der entsprechenden Bits aufsummiert werden.

Wurde zum Beispiel das erste Bit 72₂ der zweiten Datenfolge 70₂ verloren, so läßt sich dieses aus dem ersten Bit 72₁ der ersten Datenfolge 70₁ und den ersten Bits 72₃ bis 72_{N} der übrigen Datenfolgen 70₃bis 70_{N} und dem ersten Bit 68 der Prüfdatenfolge 66 durch Summenbildung ermitteln und rekonstruieren.

In gleicher Weise kann für weitere Bits der zweiten Datenfolge 70₂ verfahren werden.

Eine derartige Technologie wird insbesondere bezogen auf Speicherbänder als Datenträger 60₁ bis 60_{N} als RAIT Technologie beschrieben, wobei der Begriff RAIT eine Abkürzung für den Ausdruck Redundanted Array of Independent Tapes darstellt.

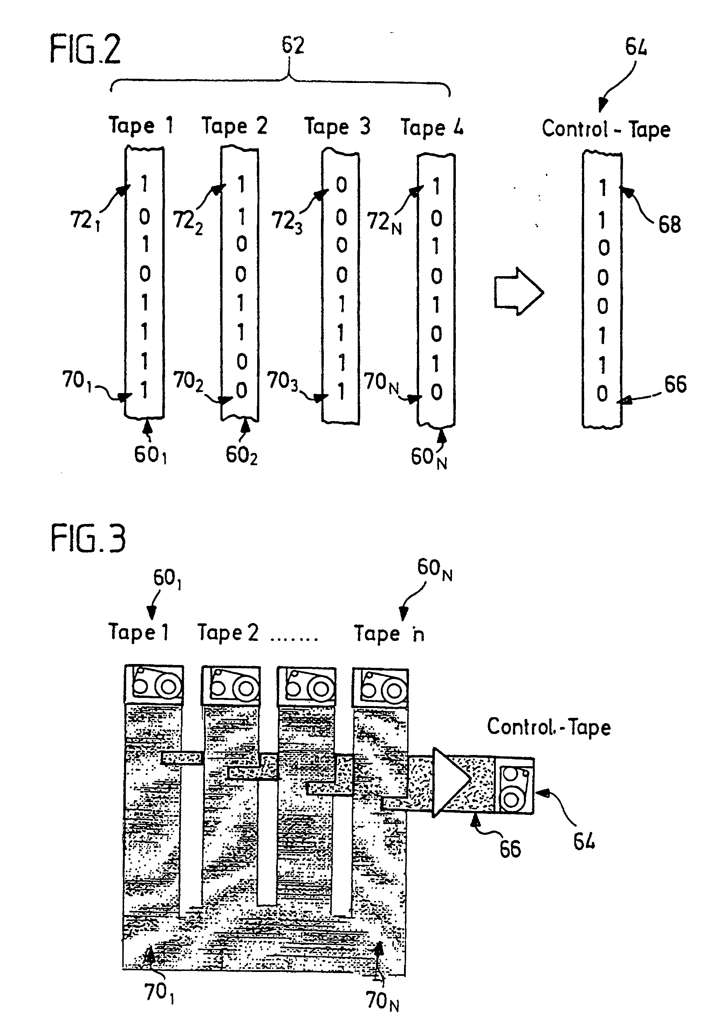

Gemäß dem bislang bekannten Stand der Technik wird eine derartige Prüfdatenfolge 66 auf dem Datenträger 64 dadurch erzeugt, daß alle Datenfolgen 70₁ bis 70_{N} einer Datengruppe 62 im wesentlichen gleichzeitig den Datenträgern 60₁ bis 60_{N} zugeführt werden und während dieses gleichzeitigen Zuführens der Datenfolgen 70₁ bis 70_{N} für das jeweils gleichzeitig zugeführte Bit 72₁ bis 72_{N} gleichzeitig das entsprechende Prüfbit 68 gebildet und auf dem Datenträger 64 im Rahmen der Prüfdatenfolge 66 gespeichert wird, wie dies in Fig. 3 dargestellt ist.

Das bislang bekannte und in Fig. 3 dargestellte Verfahren macht es aber notwendig, daß in dem Archivspeicher 20 gleichzeitig n+1 Schreib-/Leseeinheiten 28 zur Verfügung stehen, um gleichzeitig die Datenträger 60₁ bis 60_{N} der Datengruppe 62 und den Prüfdatenträger 64 in n+1 Datenträgerkassetten 24 beschreiben zu können.

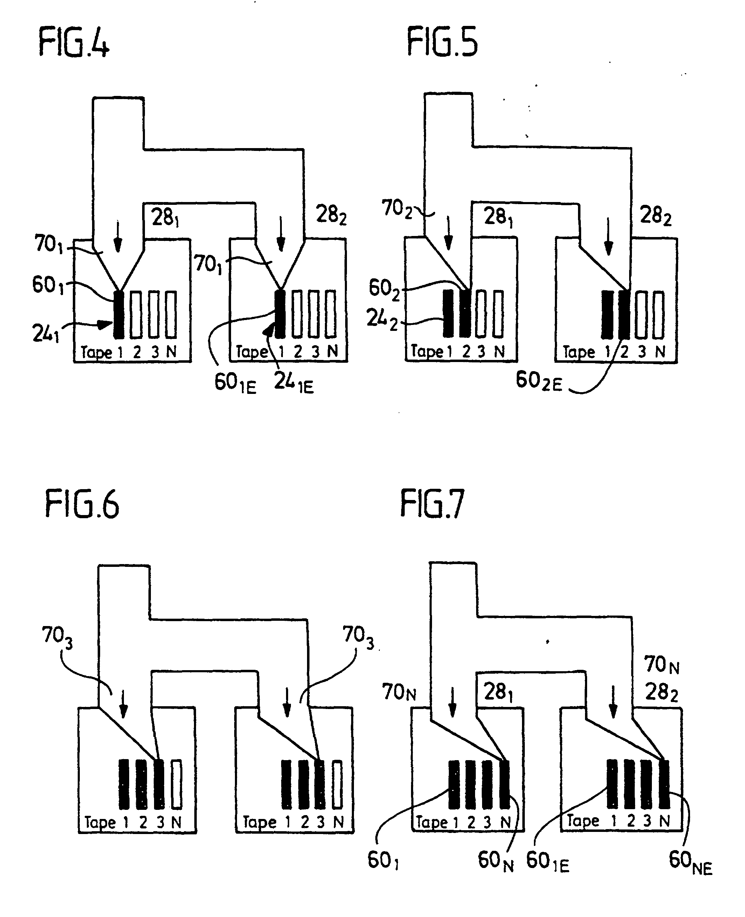

Die erfindungsgemäße Lösung, dargestellt in den Fig. 4 bis 12, sieht nun ein verbessertes Verfahren zur Speicherung der Daten vor.

Bei dem erfindungsgemäßen Verfahren wird zunächst, wie in Fig. 4 dargestellt, lediglich in einer ersten Schreib-/Leseeinheit 28₁ ein Datenträger 60₁, in diesem Fall ein Band, einer ersten Datenträgerkassette 24₁ mit der Datenfolge 70₁ beschrieben.

Um bis zur Erstellung der Prüfdatenfolge 66 jedoch die Datensicherheit zu steigern, wird gleichzeitig in einer zweiten Schreib-/Leseeinheit 28₂ ein ergänzender erster Datenträger 60_{1E} einer ergänzenden Datenträgerkassette 24_{1E} mit derselben Datenfolge 70₁ beschrieben. Damit können bei Verlust von Daten auf dem ersten Datenträger 60₁ diese vom ergänzenden ersten Datenträger 60_{1E} wiedergewonnen werden.

Nach Beschreiben des ersten Datenträgers 60₁ der ersten Datenträgerkassette 24₁ wird in der ersten Schreib-/Leseeinheit 28₁ die zweite Datenträgerkassette 24₂ mit dem zweiten Datenträger 60₂ der Datenträgergruppe 62 eingelegt und mit der zweiten Datenfolge 70₂ beschrieben. In gleicher Weise wird zur Datensicherung ein ergänzender zweiter Datenträger 60_{2E} in der zweiten Schreib-/Leseeinheit 28₂ beschrieben.

Dieses Verfahren wird, wie in Fig. 6 und 7 dargestellt, so lange durchgeführt, bis alle Datenträger 60₁ bis 60_{N} der Datenträgergruppe 62 nacheinander in der ersten Schreib-/Leseeinheit 28₁ mit den Datenfolgen 70₁bis 70_{N} beschrieben sind und gleichzeitig werden die ergänzenden Datenträger 60_{1E} bis 60_{NE} mit den Datenfolgen 70₁ bis 70_{N} in der zweiten Schreib-/Leseeinheit 28₂ beschrieben.

Damit hat zunächst die Datenspeichersteuerung 14 der erfindungsgemäßen Datenspeichereinrichtung 10 dafür gesorgt, daß alle Datenfolgen 70₁ bis 70_{N} auf den Datenträgern 60₁ bis 60_{N} erfaßt und durch die ergänzenden Datenträger 60_{1E} bis 60_{NE} zusätzlich gesichert sind.

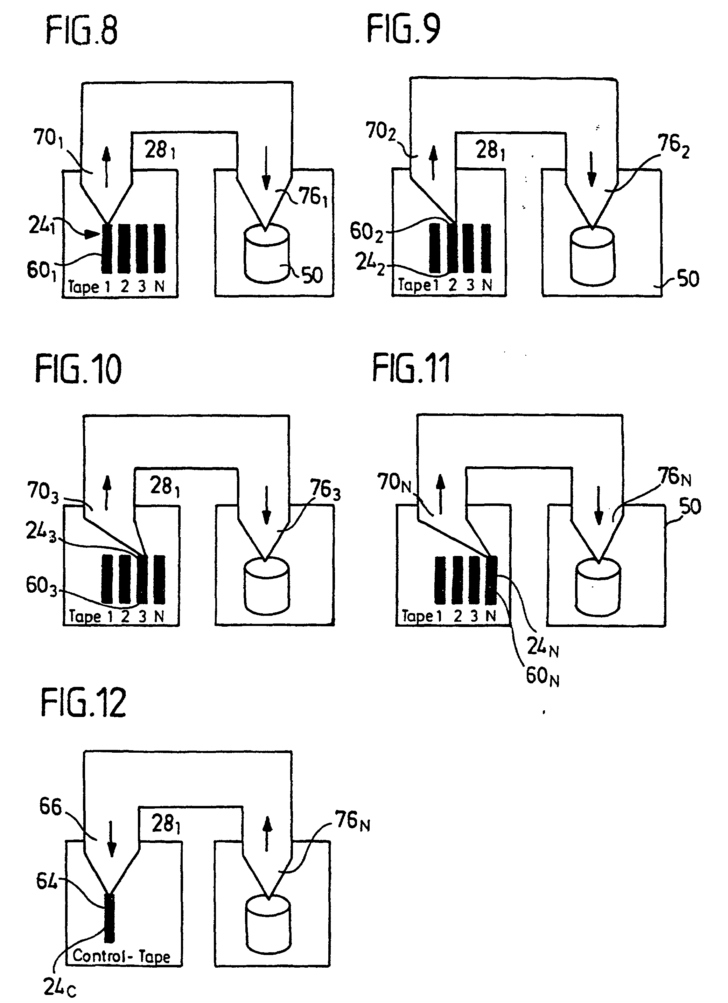

Zur Erzeugung der Prüfdatenfolge 66 wird, wie in Fig. 8 dargestellt, zunächst von der Datenspeichersteuerung 14 die Datenfolge 70₁ aus dem ersten Datenträger 60₁ ausgelesen und es wird eine erste vorläufige Prüfdatenfolge 76₁ generiert und in einem Zwischenspeicher, beispielsweise einem der Festplattenspeicher 50, abgespeichert.

Hierzu wird die erste Datenträgerkassette 24₁ wieder in die erste Schreib-/Leseeinheit 28₁ transportiert und in diese zum Lesen eingelegt. Ein derartiges Lesen der ersten Datenträgerkassette 24₁ zur Erzeugung der ersten vorläufigen Prüfdatenfolge 76₁ erfolgt beispielsweise zu Zeiten, in welchen der Rechner 16 nicht oder nur in geringem Umfang mit der erfindungsgemäßen Datenspeichereinrichtung 10 kommuniziert und diese Zeit für systeminterne Aufgaben zur Verfügung hat.

Nach Lesen der ersten Datenfolge 70₁ von dem ersten Datenträger 60₁ wird die zweite Datenträgerkassette 24₂ zum Lesen des zweiten Datenträgers 60₂ die erste Schreib-/Leseeinheit 28₁ eingelegt und die Datenspeichersteuerung 14 liest die zweite Datenfolge 70₂ vom zweiten Datenträger 60₂ und generiert gleichzeitig unter bitweiser Summenbildung mit der ersten vorläufigen Prüfdatenfolge 76₁ eine zweite Prüfdatenfolge 76₂, welche letztlich durch bitweise Summenbildung der ersten Datenfolge 70₁ und der zweiten Datenfolge 70₂ entstanden ist und sich somit auf diese beiden Datenfolgen 70₁und 70₂ erstreckt, wie in Fig. 9 dargestellt ist.

In gleicher Weise wird anschließend die zweite Datenträgerkassette 24₂ wieder aus der Schreib-/Leseeinheit 28₁ entnommen und die dritte Datenträgerkassette 24₃ mit dem dritten Datenträger 60₃ in diese eingelegt, so daß nunmehr die Datenspeichersteuerung in der Lage ist, durch Lesen der dritten Datenfolge 70₃ die dritte vorläufige Prüfdatenfolge 76₃ zu generieren, welche sich auf die drei Datenfolgen 70₁ bis 70₃ erstreckt. Dieses Verfahren wird, wie in Fig. 10 und 11 schematisch dargestellt, so lange durchgeführt, bis auch die Datenfolge 70_{N} des N-ten Datenträgers 60_{N} in der N-ten Datenträgerkassette 24_{N} gelesen ist und somit die N-te Prüfdatenfolge 76_{N} generiert ist, die sich auf alle Datenfolgen 70₁ bis 70_{N} aller Datenträger 60₁ bis 60_{N} der Datenträgergruppe 62 erstreckt.

Diese nunmehr noch auf einem der Festplattenspeicher 50 zwischengespeicherte N-te vorläufige Prüfdatenfolge 76_{N} wird abschließend von der Datenspeichersteuerung 14 mittels der ersten Schreib-/Leseeinheit 28₁ auf den Prüfdatenträger 64 geschrieben, der in einer Datenträgerkassette 24c enthalten ist, in die erste Schreib-/Leseeinheit 28₁ eingelegt wurde.

Diese Prüfdatenfolge 76_{N} entspricht dann der Prüfdatenfolge 66, welche im Zusammenhang mit Fig. 2 ausführlich erläutert wurde und die Möglichkeit schafft, verlorengegangene Daten einer der Datenfolgen 70₁ bis 70_{N} auf den Datenträgern 60₁ bis 60_{N} der Datenträgergruppe 62 bei Verlust derselben zu rekonstruieren.

Nach Erstellen der Prüfdatenfolge 66 und Abspeichern derselben auf dem Prüfdatenträger 64 können die ergänzenden Datenträger 60_{1E} bis 60_{NE} entweder zur zusätzlichen Datensicherung weitergespeichert oder zum Überschreiben freigegeben oder gelöscht werden.

Das erfindungsgemäße Verfahren schafft nun, wie in Fig. 4 bis 12 dargestellt, die Möglichkeit, in dem Archivspeicher 20 gespeicherte Daten stets mit ausreichender Datensicherheit auf den Datenträgern 60 in den Datenträgerkassetten 24 zu speichern, so daß zu keinem Zeitpunkt die Gefahr besteht, durch Verlust von Daten einer der Datenfolgen 70 die Möglichkeit der Rekonstruktion zu verlieren, wobei der große Vorteil darin besteht, daß zur Erzeugung der Prüfdatenfolge 66 nur eine Schreib-/Leseeinheit 28₁ eingesetzt werden muß.

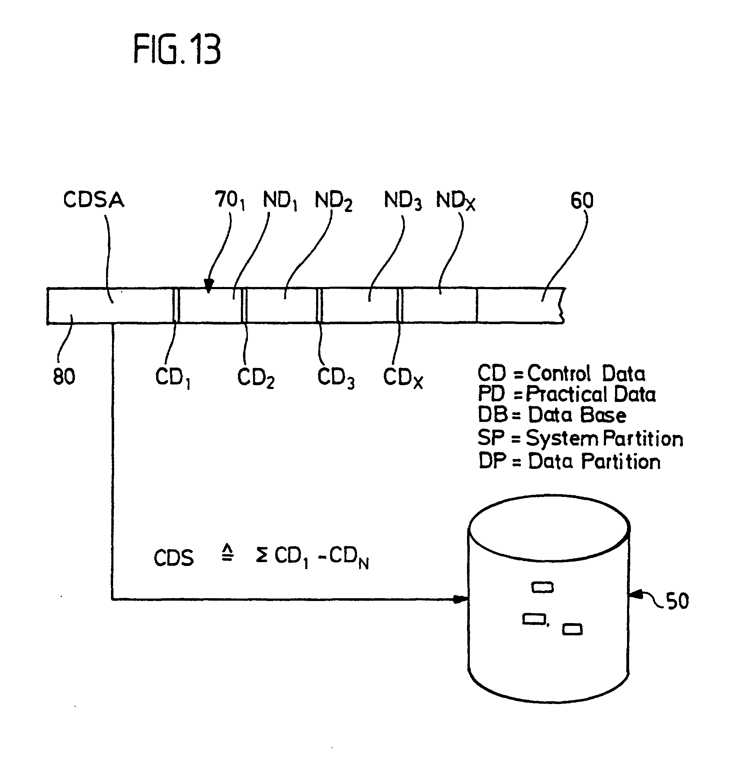

Bei der erfindungsgemäßen Datenspeichereinrichtung erfolgt, wie in Fig. 13 dargestellt, die Ablage einer Datenfolge 70 auf einem Datenspeicher 60 in Form von Nutzdatenabschnitten ND, welchen Controldatenabschnitte CD vorausgehen, wobei die Controldatenabschnitte CD Informationen über Position, Länge, Name und Zeit der entsprechenden Datenfiles aufweisen und zusätzlich noch ein Kopfteil haben, welches weitere Informationen umfaßt.

In den Controldatenabschnitten CD können ferner auch noch zusätzliche Informationen eingetragen sein.

Alle diese Controldatenabschnitte CD₁ bis CD_{X} machen dann, wenn sie jeweils vor oder hinter dem jeweiligen Nutzdatenabschnitt ND₁ bis ND_{X} angeordnet sind, das Auffinden einzelner Nutzdatenabschnitte ND insoweit zeitaufwendig, als die jeweilige Schreib-/Leseeinheit stets von dem einen Controldatenabschnitt CD zum nächsten Controldatenabschnitt CD gehen und diesen lesen muß, um zu überprüfen, ob der diesem zugeordnete Nutzdatenabschnitt ND die gewünschten Informationen erhält. Bei Aufsuchen eines spezifischen Nutzdatenabschnitts ND muß somit die Schreib-/Leseeinheit den Datenträger 60, das heißt den gesamten Datenträger 60, durchspulen und die einzelnen Controldatenabschnitte CD daraufhin überprüfen.

Um das Auffinden von Nutzdatenabschnitte ND zu vereinfachen, und zu beschleunigen, sind die Controldatenabschnitte CD₁ bis CD_{N} zusammengefaßt und beispielsweise auf einem der Festplattenspeicher 50 zusätzlich zum jeweiligen Datenträger 60 in Form einer Controldatensequenz CDS zusammengefaßt, welche auf einem Zwischenspeicher, beispielsweise einem der Festplattenspeicher 50 jedem der Datenträger 60 zugeordnet abgespeichert ist.

Um auch zu verhindern, daß bei einem Verlust der Controldatensequenz CDS im Festplattenspeicher 50 ein mühsames Überprüfen des gesamten Datenträgers 60 zum Auffinden bestimmter Nutzdaten ND notwendig ist, ist zusätzlich auf dem Datenträger die Controldatensequenz CDS ebenfalls nochmals abgespeichert und zwar, wie beispielsweise in Fig. 13 dargestellt, an einem anfangsseitigen Ende 80 des Datenträgers in Form eines Controldatensequenzabschnitts CDSA, so daß beim Aufsuchen eines bestimmten Nutzdatenabschnitts ND die Datenspeichersteuerung 14 dann, wenn die Controldatensequenz CDS nicht mehr im Festplattenspeicher 50 lesbar ist, auf den Controldatensequenzabschnitt auf dem Datenträger 60 zurückgreifen kann, indem zuerst nach dem Einlegen des Datenträgers 60 in eine der Schreib-/Leseeinheiten 28 der Controldatensequenzabschnitt CDSA gelesen und wieder in dem Festplattenspeicher 50 abgelegt wird und dann aufgrund der Controldaten in der Controldatensequenz CDS die Möglichkeit besteht, die gewünschten Nutzdaten direkt aufzufinden.

Insbesondere ermöglicht ein derartiger Controldatensequenzabschnitt CDSA auf jedem der Datenträger 60, bei Verlust der Controldatensequenz CDS im Festplattenspeicher 50 auf den Datenträgern 60 die jeweiligen Controldatensequenzabschnitte CDSA schnell zu lesen und die fehlenden Controldatensequenzen CDS im Festplattenspeicher 50 zu ergänzen. Dieses Überprüfen und Ergänzen der auf dem Festplattenspeicher 50 vorhandenen Controldatensequenzen CDS erfolgt vorzugsweise vor einer Aufnahme der Betrieb der erfindungsgemäßen Datenspeichereinrichtung in Verbindung mit dem Rechner 16.

Besonders günstig ist es, wenn die Controldatensequenzen CDS aller im Archivspeicher 20 vorhandenen Datenträgers 60 jeweils mit der Information über dem Datenträger 60 in einem Speicherbereich zusammengefaßt sind.

Der Controldatensequenzabschnitt CDSA kann aber auch im Gegensatz zum in Fig. 13 dargestellten Ausführungsbeispiel grundsätzlich in mehreren Subabschnitten über den gesamten Datenträger 60 verteilt angeordnet sein, wobei insbesondere jeder der Subabschnitte auf den nächstfolgenden Subabschnitt hinweisen kann, oder am endseitigen Ende des Datenträgers 60 angeordnet sein, wobei in diesem Fall dann die Schreib-/Leseeinheit 28 zunächst den Datenträger 60 bis zum Ende abspulen muß, um den Controldatensequenzabschnitt CDSA zu lesen und wieder in den Festplattenspeicher 50 zu laden.

## Patentansprüche

1. Verfahren zum Abspeichern von Daten in Form einer Vielzahl von Datenfolgen auf einer Vielzahl von Datenträgern, um nach einem Datenverlust wieder die Daten der Datenfolgen zur Verfügung stellen zu können, bei welchem eine definierte Anzahl aus der Vielzahl von Datenfolgen (70) zu jeweils einer Datengruppe (62) zusammengefaßt wird und bei welchem zu den Datenfolgen (70) der Datengruppe (62) eine Prüfdatenfolge (66) erstellt und zusätzlich gespeichert wird, welche die Rekonstruktion von Daten aus einer der Datenfolgen (70) dadurch erlaubt, daß die Prüfdatenfolge (66) und die anderen Datenfolgen (70) miteinander kombiniert werden,
**dadurch gekennzeichnet, daß** die Datenfolgen (70) einer Datengruppe (62) zunächst auf die Datenträger (60) geschrieben werden, daß die Prüfdatenfolge (66) dadurch erstellt wird, daß einer der bereits auf einem der Datenträger (60) geschriebenen Datenfolgen (70) der Datengruppe (62) eine vorläufige Prüfdatenfolge (76) zugeordnet wird, und daß die vorläufige Prüfdatenfolge (76) durch Berücksichtigung derselben und einer bereits auf einen der Datenträger (60) geschriebenen weiteren Datenfolge (70) aus der Datengruppe (62) auf diese weitere Datenfolge (70) erweitert wird und daß die vorläufige Prüfdatenfolge (76) so lange auf bereits auf einen der Datenträger (60) geschriebenen weitere Datenfolgen (70) der Datengruppe (62) erweitert wird, bis sich diese auf alle bereits auf einen der Datenträger (60) geschriebenen Datenfolgen (70) der Datengruppe (62) erstreckt.

2. Verfahren nach Anspruch 1, **dadurch gekennzeichnet, daß** die vorläufige Prüfdatenfolge (76) jeweils nur auf eine der weiteren Datenfolgen (70) erweitert wird.

3. Verfahren nach einem der voranstehenden Ansprüche, **dadurch gekennzeichnet, daß** die vorläufige Prüfdatenfolge (76) auf einen Zwischenspeicher (50) gespeichert wird.

4. Verfahren nach Anspruch 3, **dadurch gekennzeichnet, daß** der Zwischenspeicher auf einem von den Datenträgern (60) für die Datengruppe (62) getrennten Datenträger (50) angelegt wird.

5. Verfahren nach einem der voranstehenden Ansprüche, **dadurch gekennzeichnet, daß** jede Datenfolge (70) einer Datengruppe (62) auf einem separaten Datenträger (60) angeordnet wird.

6. Verfahren nach einem der voranstehenden Ansprüche, **dadurch gekennzeichnet, daß** jeder der Datenträger (60) ein auswechselbarer Datenträger ist.

7. Verfahren nach einem der voranstehenden Ansprüche, **dadurch gekennzeichnet, daß** in nicht oder wenig aktiven Zeiten die Datenfolgen (70) einer Datengruppe (62) von den Datenträgern (60) gelesen werden und über die vorläufige Prüfdatenfolgen (76) die Prüfdatenfolge (66) erstellt wird.

8. Verfahren nach Anspruch 7, **dadurch gekennzeichnet, daß** die Datenfolgen (70) nacheinander auf die Datenträger (60) geschrieben werden.

9. Verfahren nach Anspruch 7 oder 8, **dadurch gekennzeichnet, daß** die Datenfolgen (70) auf den Datenträgern (60) zur Erstellung der vorläufigen Prüfdatenfolgen (76) nacheinander gelesen werden.

10. Verfahren nach einem der voranstehenden Ansprüche, **dadurch gekennzeichnet, daß** beim Schreiben jeder der Datenfolgen (70) auf einen der Datenträger (60) diese Datenfolge (70) zusätzlich noch auf einen ergänzenden Datenträger (60_{E}) geschrieben wird.

11. Verfahren nach Anspruch 10, **dadurch gekennzeichnet, daß** der ergänzende Datenträger (60_{E}) nach Einbeziehen der diesem entsprechenden Datenfolge (70) in die vorläufige Prüfdatenfolge (76) freigegeben wird.

12. Verfahren nach Anspruch 11, **dadurch gekennzeichnet, daß** die ergänzenden Datenträger (60_{E}) zu einer Datengruppe (62) erst nach Erstellen der Prüfdatenfolge (66) zu dieser Datengruppe (62) freigegeben werden.

13. Verfahren nach einem der voranstehenden Ansprüche, **dadurch gekennzeichnet, daß** die Prüfdatenfolge (66) einer Datengruppe (62) auf einem Prüfdatenträger (64) gespeichert und mit den mehreren Datenträgern (60) abgelegt wird.

14. Verfahren nach einem der voranstehenden Ansprüche, **dadurch gekennzeichnet, daß** die Datenfolgen (70) auf dem Datenträger (60) in Form von Nutzdatenabschnitten (ND) und diesen jeweils lokal zugeordneten Controldatenabschnitten (CD) abgespeichert werden und daß die Controldatenabschnitte (CD) aller Nutzdatenabschnitte (ND) eines Datenträgers (60) zu einer Controldatensequenz (CDS) zusammengefaßt und an einem Ende der Folge von Nutzdatenabschnitten (ND) auf dem Datenträger (60) gespeichert werden.

15. Verfahren nach Anspruch 14, **dadurch gekennzeichnet, daß** auf dem Datenträger (60) zu jedem Nutzdatenabschnitt (ND) der diesem lokal zugeordnete Controldatenabschnitt (CD) zusätzlich abgespeichert wird.

16. Verfahren nach Anspruch 14 oder 15, **dadurch gekennzeichnet, daß** die den einzelnen Nutzdatenabschnitten (ND) eines Datenträgers (60) zugeordneten Controldatenabschnitte (CD) diesem Datenträger (60) zugeordnet in einem Zwischenspeicher (50) gespeichert werden.

17. Verfahren nach Anspruch 16, **dadurch gekennzeichnet, daß** die Controldatenabschnitte (CD) auf dem Zwischenspeicher (50) als Controldatensequenz (CDS) zusammengefaßt dem jeweiligen Datenträger (60) zugeordnet gespeichert werden.

18. Verfahren nach dem Anspruch 16 oder 17, **dadurch gekennzeichnet, daß** als Zwischenspeicher ein Festplattenspeicher (50) eingesetzt wird.

19. Verfahren nach einem der voranstehenden Ansprüche, **dadurch gekennzeichnet, daß** die Datenträger (60) in Datenträgerkassetten (24) eines Archivsystems (20) angeordnet sind und daß die Datenträgerkassetten (24) innerhalb des Archivsystems (20) in einer Aufbewahrungseinheit (22) gespeichert, in mindestens einer Schreib-/Leseeinheit (28) gelesen oder beschrieben und von einer Übergabeeinrichtung zwischen der Schreib-/Leseeinheit (28) und der Aufbewahrungseinheit (22) hin- und hertransportiert werden.

20. Verfahren nach Anspruch 19, **dadurch gekennzeichnet, daß** der Archivspeicher (20) von einer Datenspeichersteuerung (14) gesteuert ist.

21. Verfahren nach Anspruch 20, **dadurch gekennzeichnet, daß** die Datenspeichersteuerung (14) noch mit einem Festplattenspeicher (50) arbeitet, welcher von der Datenspeichersteuerung (14) parallel zum Archivspeicher (20) betrieben wird.

22. Verfahren nach Anspruch 20 oder 21, **dadurch gekennzeichnet, daß** die Datenspeichereinrichtung (10) durch die Datenspeichersteuerung (14) derart gesteuert wird, daß die Langzeitspeicherung der Daten mittels der Datenträger (60) in dem Archivspeicher (20) erfolgt und außerdem die Datenspeichersteuerung (14) mit dem Rechner (16) wie eine einzige Speichereinheit kommuniziert.

23. Verfahren nach Anspruch 22, **dadurch gekennzeichnet, daß** die vom Rechner (16) kommenden oder dem Rechner (16) zur Verfügung gestellten Daten auf dem Festplattenspeicher (50) zwischengespeichert werden.

## Claims

1. Method of storing data in the form of a plurality of data sequences on a plurality of data carriers in order to be able to make the data of the data sequences available again following a loss of data, wherein a defined number from the plurality of data sequences (70) is combined to form a respective data group (62) and wherein a test data sequence (66) is generated for the data sequences (70) of the data group (62) and stored in addition, said test data sequence allowing the reconstruction of data from one of the data sequences (70) in that the test data sequence (66) and the other data sequences (70) are combined with one another,
**characterized in that** the data sequences (70) of a data group (62) are first written onto the data carriers (60), that the test data sequence (66) is generated **in that** a preliminary test data sequence (76) is allocated to one of the data sequences (70) of the data group (62) already written on one of the data carriers (60), and that the preliminary test data sequence (76), by taking into account the same and an additional data sequence (70) from the data group (62) already written onto one of the data carriers (60), is extended to this additional data sequence (70) and that the preliminary test data sequence (76) is extended to additional data sequences (70) of the data group (62) already written onto one of the data carriers (60) for such a time until this covers all
the data sequences (70) of the data group (62) already written onto one of the data carriers (60).

2. Method as defined in claim 1, **characterized in that** the respective preliminary test data sequence (76) is extended to only one of the additional data sequences (70).

3. Method as defined in any one of the preceding claims, **characterized in that** the preliminary test data sequence (76) is stored on an intermediate storage means (50).

4. Method as defined in claim 3, **characterized in that** the intermediate storage means is established on a data carrier (50) separate from the data carriers (60) for the data group (62).

5. Method as defined in any one of the preceding claims, **characterized in that** each data sequence (70) of a data group (62) is arranged on a separate data carrier (60).

6. Method as defined in any one of the preceding claims, **characterized in that** each of the data carriers (60) is an interchangeable data carrier.

7. Method as defined in any one of the preceding claims, **characterized in that** the data sequences (70) of a data group (62) are read from the data carriers (60) in non-active or less active periods of time and the test data sequence (66) is generated via the preliminary test data sequences (76).

8. Method as defined in claim 7, **characterized in that** the data sequences (70) are written onto the data carriers (60) one after the other.

9. Method as defined in claim 7 or 8, **characterized in that** the data sequences (70) on the data carriers (60) are read one after the other for generating the preliminary test data sequences (76).

10. Method as defined in any one of the preceding claims, **characterized in that** when each of the data sequences (70) is written onto one of the data carriers (60) this data sequence (70) is written onto a supplementary data carrier (60_{E}) in addition.

11. Method as defined in claim 10, **characterized in that** the supplementary data carrier (60_{E}) is released after inclusion of the data sequence (70) corresponding thereto in the preliminary test data sequence (76).

12. Method as defined in claim 11, **characterized in that** the supplementary data carriers (60_{E}) for a data group (62) are released only after generation of the test data sequence (66) for this data group (62).

13. Method as defined in any one of the preceding claims, **characterized in that** the test data sequence (66) of a data group (62) is stored on a test data carrier (64) and deposited with the plurality of data carriers (60).

14. Method as defined in any one of the preceding claims, **characterized in that** the data sequences (70) are stored on the data carrier (60) in the form of practical data sections (ND) and respective control data sections (CD) locally associated therewith and that the control data sections (CD) of all the practical data sections (ND) of a data carrier (60) are combined to form a control data sequence (CDS) and stored on the data carrier (60) at an end of the series of practical data sections (ND).

15. Method as defined in claim 14, **characterized in that** for each practical data section (ND) the control data section (CD) locally associated therewith is stored on the data carrier (60) in addition.

16. Method as defined in claim 14 or 15, **characterized in that** the control data sections (CD) associated with the individual practical data sections (ND) of a data carrier (60) are stored on an intermediate storage means (50), allocated to this data carrier (60).

17. Method as defined in claim 16, **characterized in that** the control data sections (CD) are stored on the intermediate storage means (50) combined as a control data sequence (CDS) allocated to the respective data carrier (60).

18. Method as defined in claim 16 or 17, **characterized in that** a hard disk memory (50) is used as intermediate storage means.

19. Method as defined in any one of the preceding claims, **characterized in that** the data carriers (60) are arranged in data carrier cassettes (24) of an archive system (20) and that the data carrier cassettes (24) are stored within the archive system (20) in a storage unit (22), are read or written on in at least one read/write unit (28) and transported back and forth between the read/write unit (28) and the storage unit (22) by a transfer unit.

20. Method as defined in claim 19, **characterized in that** the archive storage means (20) is controlled by a data storage control (14).

21. Method as defined in claim 20, **characterized in that** the data storage control (14) operates in addition with a hard disk memory (50) operated by the data storage control (14) parallel to the archive storage means (20).

22. Method as defined in claim 20 or 21, **characterized in that** the data storage unit (10) is controlled by the data storage control (14) in such a manner that the long-term storage of the data is brought about in the archive storage means (20) by means of the data carriers (60) and moreover the data storage control (14) communicates with the computer (16) as a single storage unit.

23. Method as defined in claim 22, **characterized in that** the data coming from the computer (16) or made available to the computer (16) is stored temporarily in the hard disk memory (50).

## Revendications

1. Procédé de stockage de données sous la forme d'une pluralité de chaînes de données sur une pluralité de supports de données, afin de pouvoir disposer à nouveau, après une perte de données, des données des chaînes de données, dans lequel un nombre défini extrait de la pluralité des chaînes de données (70) est regroupé respectivement en un groupe de données (62), et dans lequel une chaîne de données de contrôle (66) est créée et stockée en plus avec les chaînes de données (70) du groupe de données (62), laquelle permet la reconstruction des données issues d'une des chaînes de données (70), de sorte que la chaîne de données de contrôle (66) et les autres chaînes de données (70) sont combinées entre elles,
**caractérisé en ce que** les chaînes de données (70) d'un groupe de données (62) sont tout d'abord écrites sur les supports de données (60), **en ce que** la chaîne de données de contrôle (66) est créée de sorte qu'une chaîne de données de contrôle provisoire (76) est attribuée à une des chaînes de données (70) du groupe de données déjà enregistrées sur un des supports de données (60), et **en ce que** la chaîne de données de contrôle provisoire (76) est étendue, en tenant compte de celle-ci et d'une autre chaîne de données (70) du groupe de données (62) déjà enregistrée sur un des supports de données (60), à cette autre chaîne de données (70), et **en ce que** la chaîne de données de contrôle provisoire (76) est étendue aux autres chaînes de données (70) du groupe de données (62) déjà enregistrées sur un des supports de données (60) jusqu'à ce que celle-ci s'étende à toutes les chaînes de données (70) du groupe de données (62) déjà enregistrées sur un des supports de données (60).

2. Procédé selon la revendication 1, **caractérisé en ce que** la chaîne de données de contrôle provisoire (76) est étendue respectivement uniquement à une des autres chaînes de données (70).

3. Procédé selon une des revendications précédentes, **caractérisé en ce que** la chaîne de données de contrôle provisoire (76) est stockée dans une mémoire intermédiaire (50).

4. Procédé selon la revendication 3, **caractérisé en ce que** la mémoire intermédiaire est installée sur un support de données (50) séparé des supports de données (60) du groupe de données (62).

5. Procédé selon une des revendications précédentes, **caractérisé en ce que** chaque chaîne de données (70) d'un groupe de données (62) est disposée sur un support de données (60) séparé.

6. Procédé selon une des revendications précédentes, **caractérisé en ce que** chacun des supports de données (60) est un support de données amovible.

7. Procédé selon une des revendications précédentes, **caractérisé en ce que** les chaînes de données (70) d'un groupe de données (62) sont lues par les supports de données (60) dans des temps peu ou pas actifs, et la chaîne de données de contrôle (66) est élaborée via les chaînes de données de contrôle provisoires (76).

8. Procédé selon la revendication 7, **caractérisé en ce que** les chaînes de données (70) sont écrites successivement sur les supports de données (60).

9. Procédé selon la revendication 7 ou 8, **caractérisé en ce que** les chaînes de données (70) sont lues successivement sur les supports de données (60) en vue de l'élaboration des chaînes de données de contrôle provisoires (76).

10. Procédé selon une des revendications précédentes, **caractérisé en ce que** lors de l'écriture de chacune des chaînes de données (70) sur un des supports de données (60), cette chaîne de données (70) est écrite en plus sur un support de données complémentaire (60_{E}).

11. Procédé selon la revendication 10, **caractérisé en ce que** le support de données complémentaire (60_{E}) est libéré après intégration de la chaîne de données (70) correspondant à celui-ci dans la chaîne de données de contrôle provisoire (76).

12. Procédé selon la revendication 11, **caractérisé en ce que** les supports de données complémentaires (60_{E}) pour un groupe de données (62) sont libérés seulement après création de la chaîne de données de contrôle (66) pour ce groupe de données (62).

13. Procédé selon une des revendications précédentes, **caractérisé en ce que** la chaîne de données de contrôle (66) d'un groupe de données (62) est stockée sur un support de données de contrôle (64) et installée avec les multiples supports de données (60).

14. Procédé selon une des revendications précédentes, **caractérisé en ce que** les chaînes de données (70) sont enregistrées sur le support de données (60) sous la forme de segments de données utiles (ND) et de segments de données de contrôle (CD) attribués localement respectivement à ceux-ci, et **en ce que** les segments de données de contrôle (CD) de tous les segments de données utiles (ND) d'un support de données (60) sont réunis en une séquence de données de contrôle (CDS), et sont stockés à une extrémité de la chaîne de segments de données utiles (ND) sur le support de données (60).

15. Procédé selon la revendication 14, **caractérisé en ce que**, pour chaque tronçon de données utiles (ND), le tronçon de données de contrôle (CD) attribué localement à celui-ci est stocké en plus sur le support de données (60).

16. Procédé selon la revendication 14 ou 15, **caractérisé en ce que** les segments de données de contrôle (CD) attribués aux différents segments de données utiles (ND) d'un support de données (60) sont stockés en étant attribués à ce support de données (60) dans une mémoire intermédiaire (50).

17. Procédé selon la revendication 16, **caractérisé en ce que** les segments de données de contrôle (CD) sont stockés dans la mémoire intermédiaire (50) en étant réunis dans une séquence de données de contrôle (CDS) et attribués à chaque support de données (60).

18. Procédé selon la revendication 16 ou 17, **caractérisé en ce qu'**une unité de disques magnétiques inamovibles est utilisée en tant que mémoire intermédiaire.

19. Procédé selon une des revendications précédentes, **caractérisé en ce que** les supports de données (60) sont disposés dans des cassettes de supports de données (24) d'un système d'archives (20), et **en ce que** les cassettes de supports de données (24) sont stockées à l'intérieur du système d'archives (20) dans une unité de stockage (22), sont lues ou décrites dans au moins une unité de lecture/écriture (28) et sont transportées alternativement par une installation de transmission entre l'unité de lecture/écriture (28) et l'unité de stockage (22).

20. Procédé selon la revendication 19, **caractérisé en ce que** la mémoire d'archives (20) est commandée par une commande de mémoire de données (14).

21. Procédé selon la revendication 20, **caractérisé en ce que** la commande de stockage de données (14) fonctionne également avec une unité de disques magnétiques inamovibles (50) qui est contrôlée par la commande de stockage de données (14) parallèlement à la mémoire d'archives (20).

22. Procédé selon la revendication 20 ou 21, **caractérisé en ce que** l'installation de stockage de données (10) est commandée par la commande de stockage de données (14) de sorte que le stockage à long terme des données a lieu au moyen des supports de données (60) dans la mémoire d'archives (20), et la commande de stockage de données (14) communique en outre avec l'ordinateur (16) comme une unique unité de stockage.

23. Procédé selon la revendication 22, **caractérisé en ce que** les données provenant de l'ordinateur (16) ou transmises à l'ordinateur (16) sont enregistrées temporairement dans l'unité de disques magnétiques inamovibles (50).
